# EUROPEAN PATENT APPLICATION

(11) **EP 4 510 204 A1**
(43) Date of publication of application: **19.02.2025**
(21) Application number: 24176461.2
(22) Date of filing: 16.05.2024
(51) Int. Cl.: H01M 4/04, H01M 4/139, H01M 4/62, H01M 4/66, H01M 10/04

(54) **MANUFACTURING METHOD OF ELECTRODE FOR RECHARGEABLE BATTERY**

(30) Priority: 17.08.2023 KR 20230107763
(71) Applicant: Samsung SDI Co., Ltd., Yongin-si, Gyeonggi-do 17084 (KR)
(72) Inventor: LEE, Hyunjin, Yongin-si (KR)
(74) Representative: Marks & Clerk LLP

(57) **Abstract**

A method of manufacturing an electrode of a rechargeable battery, the method including a first step of injection molding a plate-shaped electrode sheet in an injection mold with an electrode mixture that is input into an injection device, resulting in a molded electrode sheet, a second step of moving the molded electrode sheet onto a metal substrate and a third step of laminating the metal substrate and the molded electrode sheet.

## Description

### BACKGROUND

### 1. Field

Embodiments relate to a manufacturing method of an electrode for a rechargeable battery.

### 2. Description of the Related Art

Unlike primary batteries, rechargeable batteries are batteries that repeatedly charge and discharge. Small-capacity rechargeable batteries are used in small, portable electronic devices such as mobile phones, laptop computers, and camcorders, and high-capacity secondary batteries are used as power sources for driving motors in hybrid and electric vehicles.

For example, a rechargeable battery includes an electrode assembly that performs charging and discharging, a pouch that accommodates the electrode assembly, and an electrode terminal that electrically connects the electrode assembly and extends it to the outside of the pouch. The electrode assembly includes a winding type in which negative and positive electrode plates are wound on both sides with a separator therebetween, and a stacking type in which negative and positive electrode plates are stacked on both sides with a separator therebetween.

The electrode plate process for manufacturing an electrode plate includes a mixing step of mixing an active material slurry, a coating step of applying a coating portion of the active material slurry on a metal substrate, a pressing step of compressing the coating portion of the active material slurry, a notching step of cutting the metal substrate, and a slitting step.

In the coating step, loss occurs in the active material slurry and the metal substrate due to the derivation of conditions at the beginning of production. In the notching step, loss occurs in the active material and metal substrate due to the punching of the electrode plate. In the slitting step, wrinkles occur in the uncoated region, increasing the defect rate. Additionally, if changing the type of rechargeable battery, time loss occurs due to changing to a metal substrate of a different width and changing the coating die.

### SUMMARY

According to a first aspect of the present invention there is provided a method of manufacturing an electrode of a rechargeable battery. The method includes a first step of injection molding a plate-shaped electrode sheet in an injection mold with an electrode mixture that is input into an injection device, resulting in a molded electrode sheet, a second step of moving the molded electrode sheet onto a metal substrate and a third step of laminating the metal substrate and the molded electrode sheet.

In some embodiments, in the third step, the metal substrate may be cut, the molded electrode sheet may be laminated on one surface of the metal substrate in a press device, and the molded electrode sheet may be laminated to another surface of the metal substrate.

In some embodiments, in the third step, the metal substrate may be cut and the molded electrode sheet may be disposed on both sides of the metal substrate in a press device and laminated.

For a positive electrode, the electrode mixture may include a positive electrode active material, a binder, a conductive material, and a curing agent, and may have a ratio of positive electrode active material: binder: conductive material: curing agent that is 96.9: 1.8: 2: 2.

For a positive electrode, based on 100 wt% of the electrode mixture, the electrode mixture may include 85.0 wt% to 98.5 wt% of a positive electrode active material, 0.5 wt% to 5.0 wt% of a binder, 0.5 wt% to 5.0 wt% of a conductive material, and 0.5 wt% to 5.0 wt% of a curing agent.

The binder may assist in the bonding of the positive electrode active material and the conductive material and to the metal substrate.

In some embodiments, the binder may be formed of one of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, and fluorine rubber.

The conductive material may include a non-linear first conductive material and a linear second conductive material.

The non-linear first conductive material may include at least one of Denka black and carbon-based materials, wherein the Denka black and carbon-based materials include at least one of carbon black, acetylene black, Ketjen black, channel black, furnace black, lamp black, thermal black, and Super-P.

The first conductive material may have an average particle diameter of 50 nm to 110 nm.The second conductive material may be a linear carbon nanotube (CNT) manufactured through a wet grinding process. An average length of the linear carbon nanotube may be 1 µm to 5 µm.

The curing agent may be formed of or may include either one of or both of an epoxy-based resin and a phenol-based resin.

The epoxy-based resin may include at least one of bisphenol A epoxy resin, bisphenol F epoxy resin, bisphenol S epoxy resin, bisphenol epoxy resin, phenolic novolac epoxy resin, cresol novolac epoxy resin, bisphenol A novolac epoxy resin, bisphenol F novolac epoxy resin, phenolic salicylic aldehyde novolac epoxy resin, cycloaliphatic epoxy resin, aliphatic chain epoxy resin, glycidyl ester type epoxy resin, and modified resins thereof.

The phenolic-based resin may include at least one of bisphenol F, bisphenol A, bisphenol S, polyvinyl phenol, phenol, cresol, alkyl phenol, catechol, novolac resin, and halide substitutes thereof.

In some embodiments, in the second step, the electrode sheet, which may be molded and separated from the injection mold and then freely falls or may be moved by a gripper, is moved onto the metal substrate.

For a negative electrode, the electrode mixture may include 85.0 wt% to 98.5 wt% a negative electrode active material, 0.5 wt% to 5.0 wt% of a binder, 0.5 wt% to 5.0 wt% of a conductive material, and 0.5 wt% to 5.0 wt% of a curing agent.

In some embodiments, in the first step, a rectangular space is formed with an upper mold and a lower mold of the injection mold and the electrode sheet is molded into a plate-shaped rectangular parallelepiped.

In some embodiments, in the first step, an overall thickness of the electrode sheet may be uniformly molded.

In some embodiments, in the first step, a chamfer is molded, in which a thickness becomes gradually thinner on an outer portion of one surface of the electrode sheet, by a convex round region at a corner of an inner space of a lower mold among an upper mold and the lower mold of the injection mold.

In some embodiments, in the third step, the metal substrate is unwound and continuously supplied, and the electrode sheet is laminated and rewound on both sides of the metal substrate in the press device.

According to a second aspect of the present invention there is provided a manufacturing method of an electrode for a rechargeable battery that includes: a first step of injection molding a plate-shaped electrode sheet in an injection mold using an electrode mixture that is input into an injection device; a second step of moving the electrode sheet molded in the first step onto a metal substrate; and a third step of laminating the metal substrate and the electrode sheet.

In some embodiments, in the third step, the metal substrate is cut, the electrode sheet may be laminated on one surface of the metal substrate in a press device, and the electrode sheet may be laminated to the other surface of the metal substrate.

In some embodiments, in the third step, the metal substrate is cut, and the electrode sheet may be disposed on both sides of the metal substrate in the press device and laminated.

In the case of a positive electrode, the electrode mixture may include a positive electrode active material, a binder, a conductive material, and a curing agent, and may have a ratio of positive electrode active material: binder: conductive material: curing agent that is 96.9: 1.8: 2: 2.

In the case of a positive electrode, based on 100 wt% of the electrode mixture, the electrode mixture may include 85.0 wt% to 98.5 wt% of a positive electrode active material, 0.5 wt% to 5.0 wt% of a binder, 0.5 wt% to 5.0 wt% of a conductive material, and 0.5 wt% to 5.0 wt% of a curing agent.

The binder may assist the bonding of the positive electrode active material and the conductive material and to the metal substrate.

In some embodiments, the binder may be formed of one of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, and fluorine rubber.

The conductive material may include a non-linear first conductive material and a linear second conductive material.

The non-linear first conductive material may include at least one selected from the group consisting of Denka black and one or more carbon-based materials, such as carbon black, acetylene black, Ketjen black, channel black, furnace black, lamp black, thermal black, and Super-P.

The first conductive material may have an average particle diameter of 50 nm to 110 nm, the second conductive material may be a linear carbon nanotube (CNT) manufactured through a wet grinding process, and the average length of the carbon nanotube may be 1 µm to 5 µm.

The curing agent may be formed of one of an epoxy-based resin and a phenol-based resin.

The epoxy resin may include at least one selected from the group consisting of bisphenol A epoxy resin, bisphenol F epoxy resin, bisphenol S epoxy resin, bisphenol epoxy resin, phenolic novolac epoxy resin, cresol novolac epoxy resin, bisphenol A novolac epoxy resin, bisphenol F novolac epoxy resin, phenolic salicylic aldehyde novolac epoxy resin, cycloaliphatic epoxy resin, aliphatic chain epoxy resin, glycidyl ester type epoxy resin, and modified resins thereof.

The phenolic resin may include at least one selected from the group consisting of bisphenol F, bisphenol A, bisphenol S, polyvinyl phenol, phenol, cresol, alkyl phenol, catechol, novolac resin, and halide substitutes thereof.

In some embodiments, in the second step, the electrode sheet, which is molded and separated from the injection mold and then freely falls or is moved with a gripper, may be moved onto the metal substrate.

In the case of the negative electrode, based on 100 wt% of the electrode mixture, the electrode mixture may include 85.0 wt% to 98.5 wt% a negative electrode active material, 0.5 wt% to 5.0 wt% of a binder, 0.5 wt% to 5.0 wt% of a conductive material, and 0.5 wt% to 5.0 wt% of a curing agent.

In some embodiments, in the first step, a rectangular space may be formed with the upper mold and the lower mold of the injection mold, and the electrode sheet may be molded into a plate-shaped rectangular parallelepiped.

In some embodiments, in the first step, the overall thickness of the electrode sheet may be uniformly molded.

In some embodiments, in the first step, a chamfer may be molded, in which the thickness becomes gradually thinner on the outer portion of one surface of the electrode sheet, by a convex round region at the corner of the inner space of the lower mold among the upper mold and the lower mold of the injection mold.

In some embodiments, in the third step, the metal substrate may be unwound and continuously supplied, and the electrode sheet may be laminated and rewound on both sides of the metal substrate in the press device.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a flowchart of a manufacturing method of an electrode for a rechargeable battery according to one or more embodiments of the present disclosure;
FIG. 2 is a cross-sectional view of injection molding and moving of an electrode sheet with an electrode mixture in the manufacturing method of an electrode for a rechargeable battery according to one or more embodiments of the present disclosure;
FIG. 3 is an exploded perspective view of an injection mold for injection molding the electrode sheet of FIG. 2 according to one or more embodiments of the present disclosure;
FIG. 4 is a perspective view of the electrode sheet injection molded with the injection mold of FIG. 3 according to one or more embodiments of the present disclosure;
FIG. 5 is a cross-sectional view of a lamination of the moved electrode sheet on both sides of the metal substrate according to one or more embodiments of the present disclosure;
FIG. 6 is a cross-sectional view of an injection mold for injection molding an electrode sheet with an electrode mixture in the manufacturing method of an electrode for a rechargeable battery according to one or more embodiments of the present disclosure;
FIG. 7 is a top plan view of the interior of the lower mold of the injection mold of FIG. 6 according to one or more embodiments of the present disclosure;
FIG. 8 is a side view of the electrode sheet injection molded with the injection mold of FIG. 6 according to one or more embodiments of the present disclosure; and
FIG. 9 is a cross-sectional view of a lamination of an electrode sheet on both sides of a metal substrate in the manufacturing method of an electrode for a rechargeable battery according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those of ordinary skill in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, or one or more intervening layers may also be present. In addition, it will also be understood that if a layer is referred to as being "between" two layers, it can be the only layer between the two layers, or one or more intervening layers may also be present.

Like reference numerals refer to like elements throughout.

Hereinafter, the present disclosure will be described more fully hereinafter with reference to the accompanying drawings, in which embodiments of the disclosure are shown. As those of ordinary skill in the art would realize, the described embodiments may be modified in various different ways, all without departing from the scope of the present disclosure. The drawings and description are to be regarded as illustrative in nature and not restrictive.

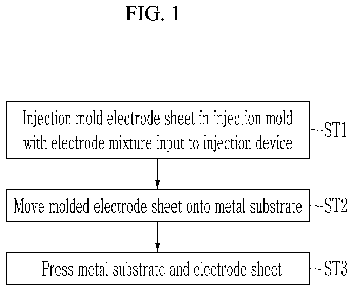

FIG. 1 is a flowchart of a manufacturing method of an electrode for a rechargeable battery according to one or more embodiments of the present disclosure. Referring to FIG. 1, the manufacturing method of an electrode for a rechargeable battery according to the first embodiment includes a first step ST1, a second step ST2, and a third step ST3.

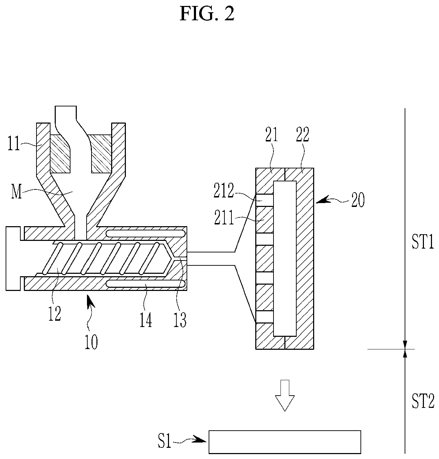

FIG. 2 is a cross-sectional view of injection molding and moving of an electrode sheet with an electrode mixture in the manufacturing method of an electrode for a rechargeable battery according to one or more embodiments.

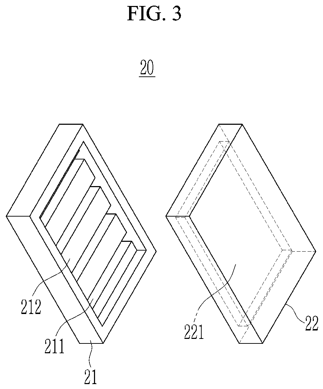

FIG. 3 is an exploded perspective view of an injection mold for injection molding the electrode sheet of FIG. 2 according to one or more embodiments.

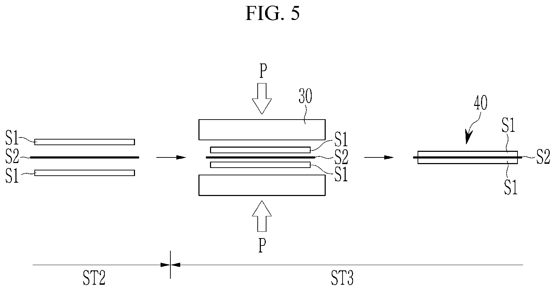

Referring to FIGS. 1 to 3, in the first step ST1, a flat plate-shaped electrode sheet S1 is injection molded in an injection mold 20 with an electrode mixture M that is input to an injection device 10. In the second step ST2, the electrode sheet S1 molded in the first step ST1 is moved onto a metal substrate S2 (see FIG. 5). In the third step ST3, an electrode 40 for the rechargeable battery is completed by laminating the metal substrate S2 and the electrode sheet S1 (see FIG. 5). That is, in the third step ST3, the metal substrate S2 and the electrode sheet S1 are attached to each other by pressing them at high temperature.

If manufacturing a positive electrode, the electrode mixture M input into the injection device 10 may be configured to form a positive electrode. The positive electrode mixture M may include a positive electrode active material, a binder, a conductive material, and a curing agent, and these may have a set ratio. For example, the positive electrode active material, binder, conductive material, and curing agent may have a ratio of 96.9:1.8:2:2.

In some embodiments, the positive electrode mixture M may include, based on 100 wt% of the positive electrode mixture, 85.0 wt% to 98.5 wt% of a positive electrode active material, 0.5 wt% to 5.0 wt% of a binder, 0.5 wt% to 5.0 wt% of a conductive material, and 0.5 wt% to 5.0 wt% of a curing agent. The positive electrode active material is the part that acts as a positive electrode in the electrode. If the positive electrode active material is less than 86.0 wt%, the performance of the positive electrode active material may be lowered. By setting the maximum value to 98.5 wt%, it is possible to include a binder, conductive material, and curing agent.

The binder typically assists the bonding of the positive electrode active material and the conductive material to the metal substrate S2. If the binder is less than 0.5 wt%, injection molding of the electrode sheet S1 may be difficult because the bonding force is weak, and if the binder exceeds 5.0 wt%, the role of other components may be reduced.

In some embodiments, the binder may include one of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, and fluorine rubber.

The conductive material may include a non-linear first conductive material and a linear second conductive material. The conductive material typically assists in the conductivity of the positive electrode active material and the metal substrate S2. If the conductive material is less than 0.5 wt%, the conductivity of the positive electrode active material and the metal sheet S2 may be reduced because the conductive assistance is weak, and if the conductive material exceeds 5.0 wt%, the role of other components may be reduced.

In some embodiments, the non-linear first conductive material may include at least one of Denka black and one or more carbon-based materials, such as carbon black, acetylene black, Ketjen black, channel black, furnace black, lamp black, thermal black, and Super-P. The non-linear first conductive material may have an average particle diameter of 50 nm to 110 nm. The second conductive material may be a linear carbon nanotube (CNT) manufactured through a wet grinding process. The average length of the carbon nanotube may be 1 µm to 5 µm.

The curing agent typically hardens the electrode mixture M in the injection mold 20, allowing the electrode mixture M to be separated from the injection mold 20 and moved to the electrode sheet S1.

The curing agent typically assists in molding the electrode mixture M into the electrode sheet S1. If the curing agent is less than 0.5 wt%, the moldability of the electrode sheet S1 may be reduced because the molding aid is weak, and if the curing agent exceeds 5.0 wt%, the role of other components may be reduced.

In some embodiments, the curing agent may include at least one of an epoxy-based resin and a phenol-based resin. In some embodiments, the epoxy-based resin may include at least one of bisphenol A epoxy resin, bisphenol F epoxy resin, bisphenol S epoxy resin, bisphenol epoxy resin, phenolic novolac epoxy resin, cresol novolac epoxy resin, bisphenol A novolac epoxy resin, bisphenol F novolac epoxy resin, phenolic salicylic aldehyde novolac epoxy resin, cycloaliphatic epoxy resin, aliphatic chain epoxy resin, glycidyl ester type epoxy resin, and modified resins thereof.

In some embodiments, the phenolic-based resin may include at least one of bisphenol F, bisphenol A, bisphenol S, polyvinyl phenol, phenol, cresol, alkyl phenol, catechol, novolac resin, and halide substitutes thereof.

If manufacturing a negative electrode, the electrode mixture M input into the injection device 10 may be configured to form a negative electrode. The electrode mixture M of the negative electrode may include a negative electrode active material, a binder, a conductive material, and a curing agent.

In some embodiments, the electrode mixture M of the negative electrode may include, based on 100 wt% of the electrode mixture, 85.0 wt% to 98.5 wt% a negative electrode active material, 0.5 wt% to 5.0 wt% of a binder, 0.5 wt% to 5.0 wt% of a conductive material, and 0.5 wt% to 5.0 wt% of a curing agent. Since the effects of the binder, conductive material, and curing agent on the negative electrode active material are the same as those on the positive electrode active material on the positive electrode, detailed description is omitted.

In the first step ST1, a rectangular space may be formed with an upper mold 21 and a lower mold 22 of the injection mold 20, and the electrode sheet S1 may be molded into a plate-shaped rectangular parallelepiped. In the first step ST1, the overall thickness of the electrode sheet S1 may be uniformly formed. In some embodiments, the temperature of the injection mold 20 may range from 100 to 230°C.

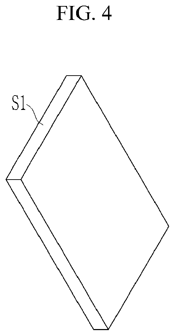

FIG. 3 is an exploded perspective view of an injection mold for injection molding the electrode sheet of FIG. 2 according to one or more embodiments, and FIG. 4 is a perspective view of the electrode sheet injection molded with the injection mold of FIG. 3 according to one or more embodiments. Referring to FIGS. 2 to 4, in order to manufacture the electrode sheet S1, the injection device 10 and the injection mold 20 may be prepared.

The injection device 10 may be configured to inject the electrode mixture M input into a hopper 11 into the interior of the injection mold 20 connected to a discharge port 13 by rotating a screw 12. A heater 14 may be provided on the outside of the screw 12 and the discharge port to facilitate the injection of the electrode mixture M.

The injection mold 20 may include the upper mold 21 and the lower mold 22 for molding the electrode sheet S1. The upper mold 21 may include a plate-forming region 211 formed by rectangular parallelepiped engraving to correspond to the shape of a plate, and an injection hole 212 for injecting the electrode mixture M into the interior of the injection mold 20. The injection holes 212 may be provided in a plurality of line types so that the electrode mixture M may be uniformly and quickly injected into the interior of the injection mold 20. The lower mold 22 may be formed with a plate-forming region 221 formed by rectangular parallelepiped engraving to correspond to the shape of a plate. The inner surface of the lower mold 22 may have a rectangular shape.

FIG. 5 is a cross-sectional view of a lamination of the moved electrode sheet on both sides of the metal substrate according to one or more embodiments. Referring to FIGS. 1 to 5, in the second step ST2, the electrode sheet S1, which is molded and separated from the injection mold 20 and then freely falls or is moved with a gripper (not shown), may be moved onto the metal substrate S2.

In the third step ST3, the metal substrate S2 is cut. In the third step ST3, the electrode sheet S1 may be laminated by heat-pressure P on one surface of the metal substrate S2, and the electrode sheet S1 is laminated by the heat-pressure P on the other surface of the metal substrate S2, in a press device 30. The electrode sheet S1 may be laminated on both surfaces of the metal substrate S2 by two heat-pressure laminating processes. Thus, the electrode 40 of the rechargeable battery may be completed.

Referring to FIG. 5, in the third step ST3, electrode sheets S1 may be disposed on both surfaces of the metal substrate S2 in the press device (30) and may be laminated. Through a single laminating process, electrode sheets S1 are laminated on both sides of the metal substrate S2, respectively. Thus, the electrode 40 of the rechargeable battery may be completed.

In this way, by producing the electrode sheet S1 with the injection mold 20, a loss of electrode mixture, i.e., the active material, is not generated, wrinkles are prevented from occurring on the uncoated region of the metal substrate S2, and loss of the metal substrate S2 due to edge slitting may be minimized.

It is possible to injection mold a different electrode sheet S1 by replacing the injection mold 20, thereby reducing material loss and time loss when converting electrode specifications.

The injection mold 20 molds the thickness of the electrode sheet S1 to be thicker than the thickness of the conventional active material layer and is made of a rectangular parallelepiped plate, so that if embedding the electrode assembly in a pouch, the rounding of the pouch is minimized to enable high-capacity designs. The plate rectangular electrode sheet S1 facilitates management of the negative-positive ratio (N/P ratio).

Hereinafter, various embodiments of the present disclosure will be described. Descriptions of the same configurations as the first embodiment and the previously described embodiments will be omitted, and descriptions of different configurations will be described.

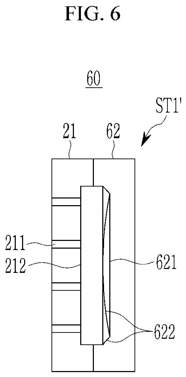

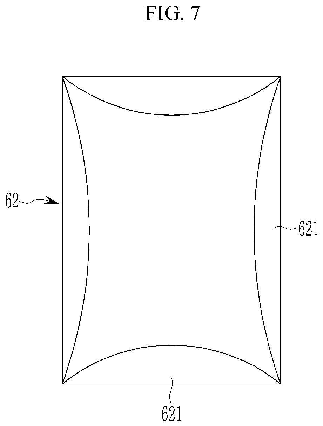

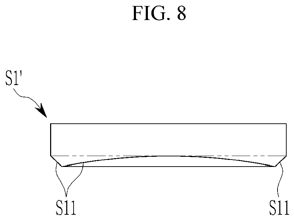

FIG. 6 is a cross-sectional view of an injection mold for injection molding an electrode sheet with an electrode mixture in the manufacturing method of an electrode for a rechargeable battery according to one or more embodiments of the present disclosure. FIG. 7 is a top plan view of the interior of the lower mold of the injection mold of FIG. 6 according to one or more embodiments. FIG. 8 is a side view of the electrode sheet injection molded with the injection mold of FIG. 6 according to one or more embodiments.

Referring to FIGS. 6 to 8, an injection mold 60 used in a first step ST1' in the manufacturing method according to one or more embodiments includes the upper mold 21 and a lower mold 62. The lower mold 62 may include a plate-forming region 621 formed by a rectangular parallelepiped engraving to correspond to the shape of a plate, and may include a convex round region 622 at the corner of the inner space. For example, the curvature radius of the round region 622 may range from 0 to 30 mm.

In the first step ST1', a chamfer S11 may be molded, in which the thickness may become gradually thinner on the outer portion of one surface of an electrode sheet S1', by the convex round region 622 at the corner of the lower mold 62 of the injection mold 60. The chamfer S 1 1 may further prevent defects from occurring at the corners of the electrode sheet S 1'.

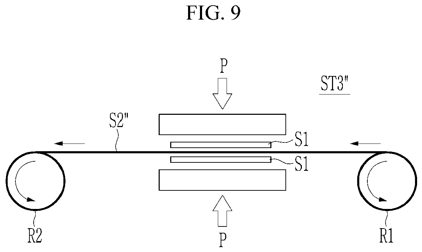

FIG. 9 is a cross-sectional view of a lamination of an electrode sheet on both sides of a metal substrate in the manufacturing method of an electrode for a rechargeable battery according to one or more embodiments of the present disclosure. Referring to FIG. 9, in the manufacturing method according to one or more embodiments, in a third step ST3", a metal substrate S2" may be unwound on an unwinding reel R1 and continuously supplied to the press device 30. In the press device 30, the electrode sheet S1 may be laminated on both surfaces of the metal substrate S2" and rewound on a rewinding reel R2.

The unwinding reel R1 may supply the metal substrate S2", and the rewinding reel R2 may rewind the electrode sheet S 1 laminated on both surfaces of the metal substrate S2". The metal substrate S2" enables a continuous process, which may implement the efficiency of the process of laminating the electrode sheet S1, and allow forming a jelly roll-type electrode assembly with the electrode sheet S1 laminated.

Embodiments of the present disclosure provide a manufacturing method for an electrode for a rechargeable battery, capable of eliminating and reducing the loss and defect rate of electrode mixtures (including active materials) and metal substrates.

According to the embodiments, the injection mold may be manufactured in the shape of the electrode sheet to reduce the loss of the electrode mixture containing the active material, and the molded electrode sheet may be laminated with a metal substrate to prevent defects caused by wrinkling of the uncoated region and to minimize the loss of metal substrate caused by slitting of the edge.

According to the embodiments, it is possible to injection mold a different electrode sheet by replacing the injection mold, thereby reducing material loss and time loss when converting electrode specifications. In addition, according to the embodiments, the thickness of the electrode sheet may be molded to be thicker than the conventional method and implemented in a more right-angled shape, thereby enabling high-capacity design of the rechargeable battery and advantageous management of the negative-positive ratio (N/P ratio). In this way, the quality of electrodes in secondary batteries may be improved.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### <Description of symbols>

| | | | |
|---|---|---|---|
| 10: | Injection device | 11: | Hopper |
| 12: | Screw | 13: | discharge port |
| 14: | Heater | 20: | Injection mold |
| 21: | Upper mold | 22: | Lower mold |
| 30: | Press device | 40: | Electrode of rechargeable battery |
| 60: | Injection mold | 62: | Lower mold |
| 211: | Plate forming region | 212: | Injection hole |
| 221: | Plate forming region | 621: | Plate forming region |
| 622: | Round region | M: | Electrode mixture |
| P: | Pressure | S1: | Electrode sheet |
| S2: | Metal substrate | S11: | Chamfer portion |
| S1': | Electrode sheet | S2": | Metal substrate |

## Claims

1. A method of manufacturing an electrode of a rechargeable battery, the method comprising:
a first step of injection molding a plate-shaped electrode sheet in an injection mold with an electrode mixture that is input into an injection device, resulting in a molded electrode sheet;
a second step of moving the molded electrode sheet onto a metal substrate; and
a third step of laminating the metal substrate and the molded electrode sheet.

2. The method of manufacturing the electrode of the rechargeable battery as claimed in claim 1, wherein, in the third step,
the metal substrate is cut,
the molded electrode sheet is laminated on one surface of the metal substrate in a press device, and
the molded electrode sheet is laminated to another surface of the metal substrate.

3. The method of manufacturing the electrode of the rechargeable battery as claimed in claim 1 or claim 2, wherein, in the third step,
the metal substrate is cut, and
the molded electrode sheet is disposed on both sides of the metal substrate in a press device and laminated.

4. The method of manufacturing the electrode of the rechargeable battery as claimed in any one of the preceding claims, wherein:
for a positive electrode, the electrode mixture includes a positive electrode active material, a binder, a conductive material, and a curing agent, and
a ratio of positive electrode active material: binder: conductive material: curing agent is 96.9: 1.8: 2: 2.

5. The method of manufacturing the electrode of the rechargeable battery as claimed in any one of the preceding claims, wherein for a positive electrode, based on 100 wt% of the electrode mixture, the electrode mixture includes:
85.0 wt% to 98.5 wt% of a positive electrode active material,
0.5 wt% to 5.0 wt% of a binder,
0.5 wt% to 5.0 wt% of a conductive material, and
0.5 wt% to 5.0 wt% of a curing agent.

6. The method of manufacturing the electrode of the rechargeable battery as claimed in claim 5, wherein:
the binder assists in the bonding of the positive electrode active material and the conductive material and to the metal substrate, and
is formed of one of polyvinylidene fluoride, polyvinyl alcohol, carboxymethyl cellulose, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, and fluorine rubber.

7. The method of manufacturing the electrode of the rechargeable battery as claimed in claim 5, wherein the conductive material includes a non-linear first conductive material and a linear second conductive material,
and optionally wherein the non-linear first conductive material includes at least one of Denka black and carbon-based materials, wherein the Denka black and carbon-based materials include at least one of carbon black, acetylene black, Ketjen black, channel black, furnace black, lamp black, thermal black, and Super-P.

8. The method of manufacturing the electrode of the rechargeable battery as claimed in claim 7, wherein:
the first conductive material has an average particle diameter of 50 nm to 110 nm,
the second conductive material is a linear carbon nanotube manufactured through a wet grinding process, and
an average length of the linear carbon nanotube is 1 µm to 5 µm.

9. The method of manufacturing the electrode of the rechargeable battery as claimed in any one of claims 5 to 8, wherein the curing agent includes either one or both of an epoxy-based resin and a phenol-based resin.

10. The method of manufacturing the electrode of the rechargeable battery as claimed in claim 9, wherein the epoxy-based resin includes at least one of bisphenol A epoxy resin, bisphenol F epoxy resin, bisphenol S epoxy resin, bisphenol epoxy resin, phenolic novolac epoxy resin, cresol novolac epoxy resin, bisphenol A novolac epoxy resin, bisphenol F novolac epoxy resin, phenolic salicylic aldehyde novolac epoxy resin, cycloaliphatic epoxy resin, aliphatic chain epoxy resin, glycidyl ester type epoxy resin, and modified resins thereof.

11. The method of manufacturing the electrode of the rechargeable battery as claimed in claim 9 or claim 10, wherein the phenolic-based resin includes at least one of bisphenol F, bisphenol A, bisphenol S, polyvinyl phenol, phenol, cresol, alkyl phenol, catechol, novolac resin, and halide substitutes thereof.

12. The method of manufacturing the electrode of the rechargeable battery as claimed in any one of the preceding claims, wherein in the second step, the electrode sheet, which is molded and separated from the injection mold and then freely falls or is moved by a gripper, is moved onto the metal substrate.

13. The method of manufacturing the electrode of the rechargeable battery as claimed in any one of the preceding claims, wherein for a negative electrode, the electrode mixture includes:
85.0 wt% to 98.5 wt% a negative electrode active material,
0.5 wt% to 5.0 wt% of a binder,
0.5 wt% to 5.0 wt% of a conductive material, and
0.5 wt% to 5.0 wt% of a curing agent.

14. The method of manufacturing the electrode of the rechargeable battery as claimed in any one of the preceding claims, wherein in the first step,
a rectangular space is formed with an upper mold and a lower mold of the injection mold, and
the electrode sheet is molded into a plate-shaped rectangular parallelepiped;
and optionally wherein either in the first step, an overall thickness of the electrode sheet is uniformly molded, or in the first step, a chamfer is molded, in which a thickness becomes gradually thinner on an outer portion of one surface of the electrode sheet, by a convex round region at a corner of an inner space of a lower mold among an upper mold and the lower mold of the injection mold.

15. The method of manufacturing the electrode of the rechargeable battery as claimed in any one of the preceding claims, wherein in the third step,
the metal substrate is unwound and continuously supplied, and
the electrode sheet is laminated and rewound on both sides of the metal substrate in a press device.
